# EUROPEAN PATENT SPECIFICATION

(11) **EP 3 578 059 B1**
(45) Date of publication and mention of the grant of the patent: **20.12.2023**
(21) Application number: 18748518.0
(22) Date of filing: 30.01.2018
(51) Int. Cl.: A23L 7/157, A23L 5/10

(54) **BATTER FOR DEEP-FRIED FOOD PRODUCTS**
BACKTEIG FÜR FRITTIERTE NAHRUNGSMITTELPRODUKTE
PÂTE DESTINÉE À DES PRODUITS ALIMENTAIRES FRITS

(30) Priority: 02.02.2017 JP 2017017474
(43) Date of publication of application: 11.12.2019
(73) Proprietor: Nisshin Seifun Welna Inc., Tokyo 101-8441 (JP)
(72) Inventor: TAKASU, Ryosuke, Tokyo 103-8544 (JP); HIWATASHI, Souichiro, Tokyo 103-8544 (JP); NISHIDE, Tatsunori, Tokyo 103-8544 (JP); FUJIMURA, Ryosuke, Tokyo 103-8544 (JP)
(74) Representative: Forstmeyer, Dietmar
(86) International application number: PCT/JP2018/003016
(87) International publication number: WO 2018/143215

(56) References cited:
- WO-A1-2012/133483
- JP-A- H 048 253
- JP-A- H 048 253
- JP-A- H0 630 713
- JP-A- H0 767 565
- JP-A- 2012 223 146
- Purcell Sarah ET AL: "Application of Oxidized Starch in Bake-Only Chicken Nuggets", Journal of Food Science, vol. 79, no. 5, 22 April 2014 (2014-04-22) , pages C810-C815, XP055782325, US ISSN: 0022-1147, DOI: 10.1111/1750-3841.12466

## Description

### Technical Field

The present invention relates to a coating material for fried food that is used as a material of a coating of a coated fried food such as tempura.

### Background Art

Fried foods refer to foods that are obtained by cooking ingredients made of various food materials in oil. Fried foods include those that are deep-fried without a coating, that is, obtained by cooking ingredients in oil as-is, and the like, but many fried foods are coated fried foods, which are obtained by cooking ingredients in oil with coating materials attached to their surfaces, and in which coatings made of the coating materials are attached to the surfaces of the ingredients. Specific examples of such coated fried foods include tempura and fritters. As a result of heating an ingredient with a coating material attached to its surface in hot oil, the coating that is in direct contact with oil has a unique texture and flavor with crispness, while the ingredient inside is well cooked as if it were steamed inside the coating and has a condensed savory taste.

However, there is a problem in that when a certain period of time has elapsed from immediately after producing a coated fried food, moisture in the ingredient has migrated to the coating, thus the juiciness of the ingredient is lost and the coating is softened, and consequently, the unique texture is likely to be lost. In particular, ready-cooked coated fried food products have been distributed and marketed in recent years, and a style has become widespread in which a consumer purchases a ready-cooked coated fried food product and eats it as-is or after cooking it in a microwave oven or the like. However, in such an eating style, the period of time from when a coated fried food is produced until when it is eaten is necessarily relatively long, and therefore, the problem of the quality of the coating deteriorating due to the above-described migration of moisture is likely to occur. In particular, in the case where a coated fried food is cooked in a microwave oven before eating, microwaves of the microwave oven cause moisture in the ingredient to heat and evaporate, and as a result, the moisture easily migrates to the coating. Thus, the quality of the coating further deteriorates.

Moreover, coated fried foods are classified into several types depending on the form of the coating material during cooking in oil, and examples of such types include a sprinkled type obtained by sprinkling a coating material in powder form over the surface of an ingredient and cooking the ingredient in oil, and a batter type obtained by attaching a coating liquid (batter) in which a coating material is mixed with water to the surface of an ingredient and cooking the ingredient in oil, and furthermore, a type, which is a batter type, is obtained by attaching a powder, such as bread crumbs, as well as the coating liquid to the surface of an ingredient and cooking the ingredient in oil. Among these types of coated fried foods, the batter type, in particular, has a relatively large amount of coating with respect to the ingredient, and accordingly, the texture of the coating largely accounts for the texture of the coated fried food as a whole. Therefore, the problem of the quality of the coating deteriorating due to the above-described migration of moisture is likely to occur.

To address the above-described problems, various techniques for improving coating materials have been proposed, including a method that uses modified wheat flour, starch, or the like in a coating material. For example, Patent Literature 1 discloses a mix for fried food coating in which at least one of an acid-treated starch, a heat-moisture-treated starch, and a crosslinked pregelatinized starch is added to a wheat flour. Patent Literature 2 discloses a coating material composition containing a heat-treated wheat flour and an oxidized starch. Patent Literature 3 discloses a coating material for microwaving, the coating material containing a wheat flour and a heat-treated starch that is obtained by heating an oxidized starch having an RVA maximum viscosity of 100 to 4,000 cp and that has a gelatinization peak temperature that is 0.5 to 5.0°C higher than that prior to the heat treatment. Patent Literature 4 discloses a karaage mix that is mixed with water and used as a liquid mixture, the mix containing a wheat flour in an amount of 15 to 35 mass% and an oxidized starch in an amount of 10 to 20 mass%.

### Citation List

### Patent Literature

Patent Literature 1: JP 07-303457A (1995)
Patent Literature 2: JP 10-57000A (1998)
Patent Literature 3: JP 2003-79344A
Patent Literature 4: JP 2015-223119A
JP H06 30713 A discloses dried tempura and its production. JP H07 67565 A discloses a coating material for fried food and the production of fried food using the same. JP H04 8253 A discloses tempura and its preparation. S. Purcell et al., Journal of Food Science, vol. 79, no. 5, 2014, pages C810 to C815 discloses the application of oxidized starch in bake-only chicken nuggets.

### Summary of Invention

The techniques disclosed in Patent Literatures 1 to 4 suppress migration of moisture from the ingredients of coated fried foods to the coatings and can prevent the quality of the coatings from deteriorating over time or deteriorating due to reheating in a microwave oven or the like, but on the other hand, there are cases where coatings of coated fried foods obtained using these techniques are too tough and lack crunchiness, which in turn results in a relatively tough texture. Therefore, there is demand for a technique that can provide a coated fried food that is less likely to feel tough when chewed and has a crispy and light texture, while suppressing the quality of a coating from deteriorating over time or deteriorating due to reheating.

The present invention relates to providing a coating material for fried food with which it is possible to produce a fried food whose coating has a crispy and light texture, not only immediately after the fried food is produced but also after a certain period of time from when the fried food is produced, or after the fried food is reheated in a microwave oven or the like.

The present invention provides a coating material for fried food, including a wheat flour in an amount of 50 to 95 mass% and a modified starch in an amount of 5 to 50 mass%, the modified starch having been subjected to an oxidation treatment or an acid treatment and having an RVA maximum viscosity of 1,000 mPa·s or less, wherein the starch is corn starch or tapioca starch.

Moreover, the present invention provides a coating liquid for fried food, including a mixture of the above-described coating material for fried food of the present invention in an amount of 100 parts by mass and a liquid in an amount of 100 to 500 parts by mass.

Moreover, the present invention provides a method for producing a fried food, including attaching a coating liquid for fried food to an ingredient and cooking the ingredient in oil, the coating liquid including a mixture of the above-described coating material for fried food of the present invention in an amount of 100 parts by mass and a liquid in an amount of 100 to 500 parts by mass.

### Description of Embodiments

A coating material for fried food of the present invention contains a wheat flour. As the wheat flour used in the present invention, any wheat flours that are usually used in food can be used without limitation. Examples of such a wheat flour include weak flour, medium flour, semi-strong flour, strong flour, Durum flour, and the like. Among these wheat flours, weak flour is particularly preferable because the texture of a resulting coating is not too tough and is crispy and light.

In the present invention, a heat-treated wheat flour can be used as the wheat flour. It is preferable that the coating material for fried food contains a heat-treated wheat flour, because the crispy and crunchy texture of a fried food that is obtained using the coating material is enhanced. In the present invention, the wheat flour contained in the coating material for fried food may be partially or entirely composed of a heat-treated wheat flour. The heat-treated wheat flour preferably accounts for 50 mass% or greater, more preferably 70 mass% or greater, and even more preferably 70 to 90 mass% of the total mass of the wheat flour contained in the coating material for fried food.

A heat-treated wheat flour obtained by heat-treating an unheated wheat flour and a heat-treated wheat flour obtained by heat-treating unheated raw material wheat and milling the heat-treated raw material wheat can both be used as the heat-treated wheat flour used in the present invention, and the heat treatment that is applied to the wheat flour or the raw material heat may be a dry heat treatment or a heat-moisture treatment. The dry heat treatment is a treatment in which the wheat flour or the raw material wheat to be treated is heated under conditions without adding moisture, and moisture in the object to be treated is positively evaporated. The dry heat treatment can be performed by, for example, heating the object in an oven, heating the object in a roasting oven, heating the object using a dryer, hot-air drying the object by blowing hot air against the object, or allowing the object to stand in a high-temperature low-humidity environment. The heat-moisture treatment is a treatment in which the wheat flour or the raw material wheat to be treated is heated while moisture in the object to be treated is maintained or moisture is added to the object to be treated. In the heat-moisture treatment, water or water vapor can be used as the moisture that is added to the object to be treated, and saturated water vapor is favorably used as the water vapor. There is no particular limitation on the heating method that is adopted in the heat-moisture treatment, and examples thereof include a method in which a heating medium, such as hot air, is brought into direct contact with the object to be treated and a method in which the object to be treated is indirectly heated in a high-humidity atmosphere. There is no particular limitation on the apparatus in which the heat-moisture treatment is performed, and examples thereof include an autoclave, a steam oven, and a single- or double-screw extruder.

The amount of the wheat flour (including the heat-treated wheat flour) contained in the coating material for fried food of the present invention is 50 to 95 mass%, preferably 65 to 93 mass%, and more preferably 70 to 90 mass% with respect to the total mass of the coating material for fried food. If the amount of the wheat flour contained in the coating material for fried food is less than 50 mass%, a fried food that is to be obtained using the coating material may feel tough in terms of texture, and if the amount of the contained wheat flour is more than 95 mass%, the quality of the fried food deteriorating over time or deteriorating due to reheating may not be effectively prevented.

The coating material for fried food of the present invention further contains a modified starch in addition to the wheat flour. The modified starch used in the present invention is characterized by the following two features: 1) the modified starch has been subjected to an oxidation treatment or an acid treatment (i.e., the modified starch is an oxidized starch or an acid-treated starch); and 2) the modified starch has an RVA maximum viscosity of 1,000 mPa·s or less. and wherein the starch is corn starch or tapioca starch.

With regard to the above-described feature 1), the oxidation treatment can be performed by treating raw material starch with an oxidizing agent according to a routine procedure. Examples of the oxidizing agent include sodium hypochlorite, hydrogen peroxide, and nitric acid. The extent to which the oxidation treatment is performed can be appropriately adjusted depending on the type of the raw material starch, the use of the coating material for fried food, and the like, and the raw material starch may be completely or partially oxidized.

The acid treatment can be performed by treating raw material starch with acid according to a routine procedure. For example, the acid treatment can be performed by adding the raw material starch into an acid-containing liquid and stirring the mixture at a predetermined temperature for a predetermined period of time. Examples of the acid used in the acid treatment include acetic acid, acetic anhydride, and octenyl succinic anhydride. The extent to which the acid treatment is performed can be appropriately adjusted depending on the type of the raw material starch, the use of the coating material for fried food, and the like.

In both of the above-described oxidation treatment and acid treatment, any starches that are usually used in food can be used without limitation as the raw material starch to be treated. Examples of such starches include potato starch, tapioca starch, sweet potato starch, corn starch, waxy corn starch, wheat starch, rice starch, and the like.

It is also possible that the modified starch used in the present invention has been subjected to both the oxidation treatment and the acid treatment.

Preferred specific examples of the modified starch used in the present invention include an oxidized starch, and an acetylated oxidized starch, derived from corn starch or tapioca starch. Note that in the present invention, one of a plurality of types of modified starches may be used alone, or two or more thereof may be used in combination.

With regard to the above-described feature 2), the RVA maximum viscosity refers to the maximum viscosity in a viscosity curve that is obtained by gelatinizing a starch and then cooling the gelatinized liquid using a rapid visco analyzer (RVA). The modified starch used in the present invention has an RVA maximum viscosity of 1,000 mPa·s or less, preferably 400 mPa·s or less, and more preferably 200 mPa·s or less. If the RVA maximum viscosity of the modified starch in the coating material for fried food is more than 1,000 mPa·s, the coating of a fried food that is to be obtained using the coating material may have a tough or thickened texture. Since the RVA maximum viscosity of starch varies depending mainly on the type of the substituent and the degree of substitution in the oxidation treatment of the raw material starch, a modified starch having a desired RVA maximum viscosity can be obtained by appropriately adjusting these variation factors. The RVA maximum viscosity is measured using the following method.

### Method for Measuring RVA Maximum Viscosity

A rapid visco analyzer (manufactured by Newport Scientific) is used as the measuring apparatus. Four grams of starch to be measured and distilled water are placed in an aluminum canister (container for accommodating the object to be measured) so that the total weight of the starch and the distilled water is 29 g. Furthermore, then, a paddle (stirrer) is inserted into the aluminum canister, and the canister is set in a tower. Note that with regard to the amount of starch placed in the aluminum canister, when the starch has a moisture content of 14%, 4 g of starch is necessary, and when the starch has a different moisture content, a conversion is made so that the amount of starch is 3.44 g in terms of solid content. Then, while the paddle in the aluminum canister is rotated at a rotation rate of 160 rpm/min, the aluminum canister is heated to increase the temperature of the content (starch suspension). Meanwhile, the viscosity of the content is measured. At this time, the temperature applied to the content of the aluminum canister is increased under the following conditions: the temperature of the content of the aluminum canister is first kept at 50°C for one minute, then increased to 95°C for 7 minutes and 30 seconds and kept at this temperature for 5 minutes, then lowered to 50°C for 7 minutes and 30 seconds, and then kept at this temperature for 2 minutes. A viscosity curve of the content during this heat treatment in the aluminum canister is thus obtained, and the maximum viscosity in the viscosity curve is used as the RVA maximum viscosity of the starch, which is to be measured.

Not that it is preferable that the modified starch used in the present invention is not heat-treated. The reason for this is that if the modified starch is heat-treated, a fried food that is obtained using the coating material for fried food containing the modified starch may have a tough texture.

The amount of the modified starch, that is, starch that satisfies both of the above-described features 1) and 2), contained in the coating material for fried food of the present invention is 5 to 50 mass%, preferably 7 to 35 mass%, and more preferably 10 to 30 mass% with respect to the total mass of the coating material for fried food. If the amount of the modified starch contained in the coating material for fried food is less than 5 mass%, the desired effects may not be obtained, and if the amount of the contained modified starch is more than 50 mass%, a fried food that is to be obtained using the coating material may feel tough in terms of texture.

The coating material for fried food of the present invention may further contain a leavening agent in addition to the wheat flour and the modified starch. With the leavening agent being added to the coating material for fried food, the crispy and crunchy texture of a fried food that is obtained using the coating material can be enhanced. Examples of the leavening agent include baking soda, baking powder, and yeast powder, and these leavening agents can be used alone or in a combination of two or more. The amount of the leavening agent contained in the coating material for fried food of the present invention is preferably 0.1 to 3 mass%, more preferably 1 to 2.5 mass%, and even more preferably 1.5 to 2 mass% with respect to the total mass of the coating material for fried food.

Moreover, from a similar standpoint, the coating material for fried food of the present invention may further contain an emulsifier in addition to the wheat flour and the modified starch. Examples of the emulsifier include a glycerin fatty acid ester, a sorbitan fatty acid ester, a polyglycerin fatty acid ester, a sucrose fatty acid ester, a propylene glycol fatty acid ester, and a stearyl organic acid ester, and these emulsifiers can be used alone or in a combination of two or more. The amount of the emulsifier contained in the coating material for fried food of the present invention is preferably 2 mass% or less, more preferably 0.1 to 1.5 mass%, and even more preferably 0.5 to 1 mass% with respect to the total mass of the coating material for fried food.

In addition to the above-described components (wheat flour, modified starch, leavening agent, and emulsifier), the coating material for fried food of the present invention may also contain other components. Examples of the other components include condiments such as sugars, salt, and powdered soy sauce, oil and fat, and thickeners, which are raw materials that can usually be used in production of coating materials for fried food of this type, and at least one of these components can be appropriately selected depending on the type of the fried food to be produced. The amount of the other components contained in the coating material for fried food is usually about 20 mass% or less with respect to the total mass of the coating material for fried food.

The coating material for fried food of the present invention is in the form of powder at normal temperature and pressure. When a fried food is to be produced using this coating material, the coating material can be used by attaching the coating material in the form of powder to the surface of an ingredient. However, if a liquid is added to and mixed with the coating material to prepare a coating liquid (batter) for fried food, and the coating liquid is used attached to the surface of an ingredient, a higher effect can be obtained. Although water is commonly used as the liquid that is used in preparing the coating liquid for fried food, liquids other than water, such as milk, stock, and soup, for example, can also be used, and these liquids may be used alone or in a combination of two or more. In the case where a coating liquid for fried food is prepared using the coating material for fried food of the present invention, the amount of the liquid mixed with the coating material can be appropriately adjusted depending on the type of the ingredient and the like, but is preferably 100 to 500 parts by mass, and more preferably 110 to 350 parts by mass with respect to 100 parts by mass of the coating material for fried food.

A fried food can be produced by attaching a coating liquid for fried food prepared using the coating material for fried food of the present invention to at least a portion of the surface of an ingredient, further attaching bread crumbs, breader, or the like, if necessary, and then cooking the ingredient in oil. The present invention can be applied to production of various types of fried foods. In particular, the present invention is suitable for tempura, fritters, fries, and karaage, and particularly suitable for tempura and fritters. The ingredient of the fried food is not limited, and, for example, various ingredients including meat, such as chicken, pork, beef, sheep meat, and goat meat; fish and shellfish, such as squid, prawns, and horse mackerel; and vegetables can be used. The ingredient may be preliminarily seasoned or may be dusted with flour, if necessary, before the coating material for fried food of the present invention or a coating liquid prepared from the coating material is attached thereto.

### Examples

Hereinafter, the present invention will be described in greater detail using examples.

Modified starches A to L were each produced by subjecting raw material starch to modification treatment (oxidation treatment, acid treatment, or phosphate crosslinking treatment). The RVA maximum viscosity of the modified starches A to L was measured using the above-described method. Table 1 below shows the measured values. The oxidation treatment was performed according to a routine procedure under wet conditions using sodium hypochlorite as the oxidizing agent. The acid treatment was performed according to a routine procedure under wet conditions using acetic acid as the acid. The phosphate crosslinking treatment was performed according to a routine procedure under wet conditions using sodium trimetaphosphate as a phosphorylating agent. In the case where the raw material starch was subjected to both the oxidation treatment and the acid treatment (production of the modified starch D), the oxidation treatment and the acid treatment were performed in that order. None of the modified starches A to L were subjected to heat treatment.

**Table 1**

| | Modified starch | | | | | |
|---|---|---|---|---|---|---|
| | A | B | C | D | E | F |
| Raw material starch | Corn starch | Corn starch | Corn starch | Tapioca starch | Tapioca starch | Tapioca starch |
| Modification treatment | Oxidation treatment | Oxidation treatment | Oxidation treatment | Oxidation treatment + Acid treatment | Oxidation treatment | Oxidation treatment |
| RVA maximum viscosity (mPa·s) | 2400 | 1100 | 980 | 380 | 190 | 100 |

| | Modified starch | | | | | |
|---|---|---|---|---|---|---|
| | G | H | I | J | K | L |
| Raw material starch | Tapioca starch | Tapioca starch | Corn starch | Corn starch | Tapioca starch | Tapioca starch |
| Modification treatment | Oxidation treatment | Acid treatment | Phosphate crosslinking treatment | Phosphate crosslinking treatment | Phosphate crosslinking treatment | Phosphate crosslinking treatment |
| RVA maximum viscosity (mPa·s) | 95 | 30 | 2300 | 980 | 370 | 180 |

### Examples 1 to 23 and Comparative Examples 1 to 10

Materials were mixed in mixing ratios shown in Tables 2 to 4 below to produce coating materials for fried food. The materials used were as follows:
- Wheat flour: weak flour (manufactured by Nisshin Foods Inc.)
- Leavening agent: baking powder (manufactured by Nisshin Foods Inc.)
- Emulsifier: sucrose fatty acid ester

### Test Examples

First, 160 parts by mass of water was mixed with 100 parts by mass of each coating material for fried food to produce a coating liquid for tempura. Prawns with their tails still attached (20 g/1 prawn) were peeled, drained, and dusted with flour. Then, the flesh of each prawn was completely coated with the coating liquid. The prawns were put into an oil bath at 170°C and cooked in oil for two and a half minutes to produce tempura prawns. The freshly-made tempura prawns were eaten by a panel of ten members, and the texture at that time was evaluated based on evaluation criteria below. Moreover, the tempura prawns that were stored at room temperature for 4 hours after production and then reheated in a microwave oven at 600 W for 10 seconds were eaten by the panel of ten members, and the texture at that time was evaluated based on the evaluation criteria below. Tables 2 to 4 below show the results.

### Tempura Texture Evaluation Criteria

5 points: Excellent coating that is not too tough, is extremely crispy, and is crunchy when chewed.
4 points: Excellent coating that is not too tough and is crispy.
3 points: Coating that lacks crispness and is slightly tough or soft.
2 points: Poor coating that lacks crispness and is relatively too tough or relatively too soft.
1 point: Extremely poor coating that lacks crispness and is too tough or too soft.

**Table 2**

| | | Examples | | | | | | Comparative Examples | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| Composition of coating material (mass%) | Wheat flour | 88 | 88 | 88 | 88 | 88 | 88 | 88 | 88 | 88 | 88 | 88 | 88 |
| | Modified starch A | - | - | - | - | - | - | 10 | - | - | - | - | - |
| | Modified starch B | - | - | - | - | - | - | - | 10 | - | - | - | - |
| | Modified starch C | 10 | - | - | - | - | - | - | - | - | - | - | - |
| | Modified starch D | - | 10 | - | - | - | - | - | - | - | - | - | - |
| | Modified starch E | - | - | 10 | - | - | - | - | - | - | - | - | - |
| | Modified starch F | - | - | - | 10 | - | - | - | - | - | - | - | - |
| | Modified starch G | - | - | - | - | 10 | - | - | - | - | - | - | - |
| | Modified starch H | - | - | - | - | - | 10 | - | - | - | - | - | - |
| | Modified starch I | - | - | - | - | - | - | - | - | 10 | - | - | - |
| | Modified starch J | - | - | - | - | - | - | - | - | - | 10 | - | - |
| | Modified starch K | - | - | - | - | - | - | - | - | - | - | 10 | - |
| | Modified starch L | - | - | - | - | - | - | | - | - | - | - | 10 |
| | Leavening agent | 2 | 2 | 2 | 2 | 2 | 2 | 2 | 2 | 2 | 2 | 2 | 2 |
| | Total | 100 | 100 | 100 | 100 | 100 | 100 | 100 | 100 | 100 | 100 | 100 | 100 |
| RVA maximum viscosity of modified starch (mPa·s) | | 980 | 380 | 190 | 100 | 95 | 30 | 2400 | 1100 | 2300 | 980 | 370 | 180 |
| Evaluation | Texture of tempura prawn (Immediately after production) | 4.1 | 4.3 | 4.5 | 4.6 | 4.7 | 4.7 | 2.4 | 2.7 | 1.9 | 2.2 | 2.3 | 2.5 |
| | Texture of tempura prawn (After reheating) | 3.8 | 4.0 | 4.4 | 4.4 | 4.5 | 4.5 | 1.8 | 1.9 | 1.4 | 1.7 | 2.0 | 2.1 |

The modified starches C to H were subjected to the oxidation treatment or the acid treatment and had an RVA maximum viscosity of 1,000 mPa·s or less, and the other modified starches A, B, and I to L were subjected to the phosphate crosslinking treatment instead of the oxidation treatment or the acid treatment and/or had an RVA maximum viscosity of more than 1,000 mPa·s.

As shown in Table 2, the coating materials for fried food of the examples contained any of the modified starches C to H, and therefore, compared with the coating materials for fried food of the comparative examples, which contained any of the other modified starches A, B, and I to L, the tempura texture was excellent and the coatings were crispy without being too tough immediately after being produced and after being reheated. Thus, the effectiveness of the modified starches C to H in the coating materials for fried food is clear.

Moreover, based on a comparison among Examples 1 to 6, it can be said that the RVA maximum viscosity of the modified starch is preferably about 30 to 190 mPa·s, which is within the range of Examples 3 to 6, and more preferably about 30 to 95 mPa·s, which is within the range of Examples 5 to 6, or less than 100 mPa·s.

**Table 3**

| | | Examples | | | | | | | Comparative Examples | | | |
|---|---|---|---|---|---|---|---|---|---|---|---|---|
| | | 7 | 8 | 9 | 10 | 11 | 12 | 13 | 7 | 8 | 9 | 10 |
| Composition of coating material (mass%) | Wheat flour | 50 | 60 | 65 | 70 | 75 | 85 | 95 | 30 | 46 | 97 | 100 |
| | Modified starch D | 50 | 40 | 35 | 30 | 25 | 15 | 5 | 70 | 54 | 3 | - |
| | Total | 100 | 100 | 100 | 100 | 100 | 100 | 100 | 100 | 100 | 100 | 100 |
| RVA maximum viscosity of modified starch (mPa·s) | | 380 | 380 | 380 | 380 | 380 | 380 | 380 | 380 | 380 | 380 | - |
| Evaluation | Texture of tempura prawn (Immediately after production) | 3.8 | 3.9 | 3.9 | 4.1 | 4.1 | 4.2 | 4.1 | 2.7 | 3.2 | 3.7 | 3.6 |
| | Texture of tempura prawn (After reheating) | 3.5 | 3.5 | 3.6 | 3.8 | 3.8 | 3.9 | 3.7 | 2.2 | 2.7 | 2.4 | 2.1 |

It can be seen from the results shown in Table 3 that the amount of the wheat flour (weak flour) contained in the coating material for fried food is preferably 50 to 95 mass%, which is within the range of Examples 7 to 13, more preferably about 65 to 95 mass%, which is within the range of Examples 9 to 13, and even more preferably about 70 to 85 mass%, which is within the range of Examples 10 to 12.

**Table 4**

| | | Examples | | | | | | | | | | |
|---|---|---|---|---|---|---|---|---|---|---|---|---|
| | | 11 | 14 | 15 | 16 | 17 | 18 | 19 | 20 | 21 | 22 | 23 |
| Composition of coating material (mass%) | Wheat flour | 75 | 75 | 75 | 75 | 75 | 75 | 75 | 75 | 75 | 75 | 75 |
| | Modified starch D | 25 | 24.9 | 24 | 23 | 22 | 21 | 24.5 | 24 | 23 | 22 | 22 |
| | Leavening agent | - | 0.1 | 1 | 2 | 3 | 4 | - | - | - | - | 2 |
| | Emulsifier | - | - | - | - | - | - | 0.5 | 1 | 2 | 3 | 1 |
| | Total | 100 | 100 | 100 | 100 | 100 | 100 | 100 | 100 | 100 | 100 | 100 |
| RVA maximum viscosity of modified starch (mPa·s) | | 380 | 380 | 380 | 380 | 380 | 380 | 380 | 380 | 380 | 380 | 380 |
| Evaluation | Texture of tempura prawn (Immediately after production) | 4.1 | 4.2 | 4.3 | 4.4 | 4.3 | 4.1 | 4.2 | 4.3 | 4.4 | 4.1 | 4.5 |
| | Texture of tempura prawn (After reheating) | 3.8 | 4.0 | 4.1 | 4.2 | 3.9 | 3.7 | 4.0 | 4.1 | 3.1 | 3.7 | 4.4 |

In Table 4, based on a comparison of Examples 11 and 18 with Examples 14 to 17, it can be seen that the tempura texture immediately after production and after reheating is further enhanced by adding a leavening agent (baking powder) in an amount of about 0.1 to 3 mass% to the coating material for fried food containing a wheat flour and a specific modified starch.

Moreover, in Table 4, based on a comparison of Examples 11 and 22 with Examples 19 to 21, it can be seen that the tempura texture immediately after production and after reheating is further enhanced by adding an emulsifier (sucrose fatty acid ester) in an amount of about 0.5 to 2 mass% to the coating material for fried food containing a wheat flour and a specific modified starch.

Moreover, since Example 23 was especially highly evaluated, it can be seen that it is effective to add both a leavening agent and an emulsifier to the coating material for fried food containing a wheat flour and a specific modified starch.

### Industrial Applicability

According to the present invention, it is possible to produce a fried food whose coating has a crispy and light texture not only immediately after the fried food is produced but also after a certain period of time from when the fried food is produced, or after the fried food is reheated in a microwave oven or the like.

## Claims

1. A coating material for fried food, comprising:
a wheat flour in an amount of 50 to 95 mass%; and
a modified starch in an amount of 5 to 50 mass%, the modified starch having been subjected to an oxidation treatment or an acid treatment and having an RVA maximum viscosity of 1,000 mPa·s or less;
wherein the starch is corn starch or tapioca starch.

2. The coating material for fried food as set forth in claim 1,
wherein the wheat flour includes a heat-treated wheat flour.

3. The coating material for fried food as set forth in claim 1 or 2,
wherein the modified starch is not heat-treated.

4. The coating material for fried food as set forth in any one of claims 1 to 3, further comprising:
a leavening agent in an amount of 0.1 to 3 mass%.

5. The coating material for fried food as set forth in any one of claims 1 to 4, further comprising an emulsifier in an amount of 2 mass% or less.

6. A coating liquid for fried food, comprising a mixture of the coating material for fried food as set forth in any one of claims 1 to 5 in an amount of 100 parts by mass and a liquid in an amount of 100 to 500 parts by mass.

7. A method for producing fried food, comprising attaching a coating liquid for fried food to an ingredient and cooking the ingredient in oil, the coating liquid including a mixture of the coating material for fried food as set forth in any one of claims 1 to 5 in an
amount of 100 parts by mass and a liquid in an amount of 100 to 500 parts by mass.

## Patentansprüche

1. Beschichtungsmaterial für frittierte Lebensmittel, umfassend:
ein Weizenmehl in einer Menge von 50 bis 95 Masse-%; und
eine modifizierte Stärke in einer Menge von 5 bis 50 Masse-%, wobei die modifizierte Stärke einer Oxidationsbehandlung oder einer Säurebehandlung unterzogen wurde und eine maximale RVA-Viskosität von 1.000 mPa·s oder weniger aufweist;
wobei die Stärke Maisstärke oder Tapiokastärke ist.

2. Beschichtungsmaterial für frittierte Lebensmittel nach Anspruch 1,
wobei das Weizenmehl ein wärmebehandeltes Weizenmehl enthält.

3. Beschichtungsmaterial für frittierte Lebensmittel nach Anspruch 1 oder 2,
wobei die modifizierte Stärke nicht wärmebehandelt ist.

4. Beschichtungsmaterial für frittierte Lebensmittel nach einem der Ansprüche 1 bis 3, das ferner umfasst:
ein Backtriebmittel in einer Menge von 0,1 bis 3 Masse-%.

5. Beschichtungsmaterial für frittierte Lebensmittel nach einem der Ansprüche 1 bis 4, das außerdem einen Emulgator in einer Menge von 2 Masse-% oder weniger enthält.

6. Beschichtungsflüssigkeit für frittierte Lebensmittel, umfassend ein Gemisch aus dem Beschichtungsmaterial für frittierte Lebensmittel nach einem der Ansprüche 1 bis 5 in einer Menge von 100 Masseteilen und einer Flüssigkeit in einer Menge von 100 bis 500 Masseteilen.

7. Verfahren zur Herstellung von frittierten Lebensmitteln, umfassend das Aufbringen einer Beschichtungsflüssigkeit für frittierte Lebensmittel auf eine Zutat und das Kochen der Zutat in Öl, wobei die Beschichtungsflüssigkeit ein Gemisch aus dem Beschichtungsmaterial für frittierte Lebensmittel gemäß einem der Ansprüche 1 bis 5 in einer Menge von 100 Masseteilen und einer Flüssigkeit in einer Menge von 100 bis 500 Masseteilen enthält.

## Revendications

1. Matériau d'enrobage pour aliments frits, comprenant
une farine de blé dans une proportion de 50 à 95 % en masse; et
un amidon modifié dans une proportion de 5 à 50 % en masse, l'amidon modifié ayant été soumis à un traitement d'oxydation ou à un traitement acide et ayant une viscosité maximale RVA de 1 000 mPa·s ou moins;
dans lequel l'amidon est de l'amidon de maïs ou de tapioca.

2. Matériau d'enrobage pour aliments frits tel que décrit dans la revendication 1,
dans lequel la farine de blé comprend une farine de blé traitée thermiquement.

3. Matériau d'enrobage pour aliments frits tel que décrit dans la revendication 1 ou 2, dans lequel l'amidon modifié n'est pas traité thermiquement.

4. Matériau d'enrobage pour aliments frits tel que décrit dans l'une quelconque des revendications 1 à 3, comprenant en outre:
un agent de levage dans une proportion de 0,1 à 3 % en masse.

5. Matériau d'enrobage pour aliments frits tel que décrit dans l'une quelconque des revendications 1 à 4, comprenant en outre un émulsifiant dans une proportion de 2 % en masse ou moins.

6. Liquide d'enrobage pour aliments frits, comprenant un mélange du matériau d'enrobage pour aliments frits tel que décrit dans l'une quelconque des revendications 1 à 5 dans une quantité de 100 parties en masse et un liquide dans une quantité de 100 à 500 parties en masse.

7. Procédé de production d'aliments frits, comprenant la fixation d'un liquide d'enrobage pour aliments frits à un ingrédient et la cuisson de l'ingrédient dans l'huile, le liquide d'enrobage comprenant un mélange du matériau d'enrobage pour aliments frits tel que décrit dans l'une quelconque des revendications 1 à 5 dans une quantité de 100 parties en masse et un liquide dans une quantité de 100 à 500 parties en masse.
